# FASCICULE DE BREVET EUROPEEN

(11) **EP 2 464 769 B1**
(45) Date de publication et mention de la délivrance du brevet: **29.10.2014**
(21) Numéro de dépôt: 10763207.7
(22) Date de dépôt: 03.08.2010
(51) Int. Cl.: D04H 1/46, D04H 3/04, D04H 3/10, C04B 35/83

(54) **PROCÉDÉ DE FABRICATION D'UN COMPLEXE MULTIAXIAL DE NAPPES RÉALISÉES A PARTIR DE CÂBLES CRAQUES SOUS FORME DE BANDES ET INSTALLATION DE FABRICATION**
VERFAHREN ZUR HERSTELLUNG EINER COMPLEX MULTIAXIAL,GELEGEBAHN UND EINRICHTUNG ZUR HERSTELLUNG
METHOD OF MANUFACTURING A COMPLEX MULTIAXIAL, WEBS AND APPARATUS FOR MAKING THE SAME

(30) Priorité: 14.08.2009 FR 0955672; 25.03.2010 FR 1052148
(43) Date de publication de la demande: 20.06.2012
(73) Titulaire: Ferlam Technologies, 59100 Roubaix (FR)
(72) Inventeur: DECANT, Xavier, F-59910 Bondues (FR)
(74) Mandataire: Dupuis, François
(86) Numéro de dépôt international: PCT/FR2010/051645
(87) Numéro de publication internationale: WO 2011/018574

(56) Documents cités:
- EP-A1- 1 054 091
- WO-A1-2007/098786
- DE-C1- 10 252 671
- FR-A1- 2 196 966
- FR-A1- 2 761 380

## Description

L'invention se rattache à la technologie textile du craquage à partir par exemple de fibres de carbone et à la mise en oeuvre de ces fibres en nappes en orientation unidirectionnelle et/ou multiaxiale.

Cette technologie est bien connue et trouve une application pour la fabrication de matériaux composites à base de fibres de carbone décrit dans le brevet français n° 2196966.

Elle consiste à craquer en parallèle plusieurs câbles de carbone de type ZOLTEK XP 35050 15T-X1, TENAX 24K STS 5611 ou encore SGL 50K C30 T050 ensimage EEA dans une craqueuse du type SEYDEL 860 ou NSC de type TB11 ou équivalent. Les câbles en carbone sont craqués simultanément et étendus de manière à obtenir une bande de filaments craqués d'une largeur se situant entre 45 mm et plus ou moins 350 mm avec une longueur de fibres de 15 à 180 mm. Les câbles craqués doivent rester jointifs une fois étalés sous forme de bande. De manière connue, les câbles craqués en fibres en carbone sont disposées sur des supports en papier, puis enroulés en bobine. Ces dernières sont alors positionnées à l'entrée d'une table convoyeuse dans le sens longitudinal après séparation avec le support papier.

Selon l'art antérieur, les fils ou câbles de filament continus sont déposés sur des machines de tissage multiaxial du type LIBA. Les bandes ainsi formées sont alors juxtaposées et rendues solidaires par tricotage. Le procédé présente des inconvénients majeurs liés à la mise en oeuvre de fils qui est une solution coûteuse, et aussi parce que les filaments continus supportent mal l'aiguilletage.

Pour remédier à ce problème, il a été proposé une solution décrite dans le brevet EP 972102 qui consiste à craquer et étaler ces câbles de façon à former des bandes, et ensuite à donner à chacune de ces bandes une cohésion de manière à pouvoir les manipuler. Ensuite, lesdites bandes sont enroulées puis transportées dans des lieux équipés de machines de tissage multiaxial du type LIBA, les bandes étant juxtaposées puis rendues solidaires par tricotage. Cette solution requiert des projections de liquide suivi d'un séchage / ou apport d'agents chimiques de liaison, ou encore des opérations mécaniques intermédiaires telles qu'un aiguilletage par exemple. Elle nécessite de plus un investissement très élevé en termes de machines pour en assurer la mise en oeuvre. Le coût de production de bandes craquées est élevé et en limite en conséquence les applications.

La démarche du demandeur a donc été de tenter de s'affranchir de ces contraintes en supprimant purement et simplement la phase de cohésion préalable de chacune des bandes craquées.

Un autre but recherché selon l'invention par le demandeur a été de simplifier les installations existantes coûteuses en investissement matériel et de proposer la mise en oeuvre d'une installation apte à proposer à partir d'une base commune spécifique des aménagements complémentaires à la carte qui puissent répondre à des besoins différents selon les utilisateurs, tout en restant dans une offre de prix nettement inférieure aux coûts des installations existantes.

Selon une première caractéristique, le procédé de fabrication du complexe multiaxial à partir de bandes craquées selon l'invention consiste à disposer sur une table de convoyage, à l'entrée de celle-ci une première couche de bandes craquées, pré-enroulées et prédécoupées, selon l'axe longitudinal de la table, en superposition partielle desdites bandes, à disposer le long de la table convoyeuse au moins deux moyens de transfert et de dépose de bandes, en position oblique et/ou divergente selon des angles prédéterminés, réceptionnant chacun une bande pré-craquée, éventuellement pré-enroulée et prédécoupée et à disposer ces bandes en superpositions successives dans des plans différents pour constituer une nappe multiaxiale de bandes craquées, ladite nappe étant ensuite traitée par une aiguilleteuse, l'avancement du tapis support de la table convoyeuse se faisant pas à pas pour assurer la superposition des différentes couches de bandes pré-craquées déposées par les dits moyens de transfert, la mise en oeuvre du procédé s'effectuant sans opération préalable de traitement de cohésion de chacune desdites bandes, caractérisé en ce que la mise en oeuvre du procédé s'effectue sans opération de traitement de cohésion préalable de chacune desdites bandes, et en ce que
- une première couche de bandes non cohésives est présentée selon l'axe longitudinal de la table pour être déposée au fur et à mesure dans le sens de défilement de la bande par l'intermédiaire d'un dispositif de dépose de la bande craquée non cohésive,
- d'autres couches de bandes non cohésives destinées à être en superposition successives dans des plans différents de la première couche sont présentées par le même dispositif recevant les dites bandes et les déposant sur des moyens de transfert qui les reçoivent et les translatent selon un mouvement transversal par rapport à la table en les déposant au fur et à mesure de leur déplacement jusqu'à la zone de coupe disposée à l'opposé de part et d'autre de la dite table, les dites bandes étant déposées par leur extrémité puis déroulées jusqu'à la zone de coupe,
et en ce que la dépose des dites bandes non cohésives est assurée par les moyens de transfert qui sont agencés pour permettre la dépose continue et progressive des bandes en vue de constituer le nappage,
et en ce qu'en fin de course des moyens de transfert, on procède à la découpe des bandes par un dispositif fixe de blocage et de découpe disposé de part et d'autre de la table , et on procède ensuite au retour des moyens de transfert avec la dépose des bandes non-cohésives pour constituer une autre nappe.

Selon une autre caractéristique, les dits moyens de transfert et de dépose des bandes sont des convoyeurs-nappeurs réceptionnant chacun une bande pré-craquée, éventuellement pré-enroulée et prédécoupée.

Selon une autre caractéristique, l'installation de mise en oeuvre du procédé du type comprenant une table convoyeuse présentant en amont la réception de bandes pré-craquées et pré-enroulées et en aval, une aiguilleteuse est remarquable en ce qu'elle comprend au moins deux convoyeurs nappeurs positionnés selon des angles définis par rapport au sens d'avancement de la table convoyeuse en opposition, ayant pour fonction de déposer au fur et à mesure chacun une bande craquée sur la table convoyeuse en superposition pour le premier sur la première couche de bandes craquées disposées initialement en amont de la table convoyeuse et le second sur les deux couches déjà déposées provenant de la table convoyeuse et du premier convoyeur nappeur, permettant l'obtention d'une nappe multicouches en superposition et multiaxiale.

Selon une autre caractéristique, les dits moyens de transfert et de dépose des bandes sont des chariots délivreurs réceptionnant chacun une bande craquée prédécoupée disposée directement sans autre opération intermédiaire, la dite bande comprenant une bande de carbone et une bande support de papier, les dits chariots délivreurs étant agencés pour recevoir des moyens de ré-embobinage de la bande papier après séparation avec la bande support de carbone.

Ces caractéristiques et d'autres encore ressortiront bien de la suite de la description.

Pour fixer l'objet de l'invention illustrée d'une manière non limitative aux figures des dessins où :
- la figure 1 est une vue à caractère schématique en plan de l'installation selon une première réalisation et mise en oeuvre du procédé selon l'invention.
- la figure 2 est une vue partielle à grande échelle illustrant le dispositif de dépose de bandes pré-craquées et pré-enroulées sur la table convoyeuse.
- La figure 2A est une vue en plan schématique illustrant la dépose successives de nappes selon différents axes.
- La figure 2B est une vue à caractère schématique en coupe transversale illustrant la superposition de bandes craquées déposées longitudinalement sur la table convoyeuse.
- La figure 2C est une vue à caractère schématique en coupe longitudinale de la table convoyeuse illustrant la superposition des bandes craquées telles que déposées par chacun des convoyeurs-nappeurs.
- La figure 3 est une vue à caractère schématique illustrant le principe de fonctionnement du convoyeur-nappeur.
- Les figures 4 à 11 illustrent les différentes phases de fonctionnement du convoyeur-nappeur en phase de procédé de nappage.
- La figure 12 illustre une vue de dessus et à caractère schématique d'une seconde variante de mise en oeuvre de l'installation intégrant l'alimentation automatique des desdits convoyeurs-nappeurs avec la fourniture de bandes craquées à partir de craqueuses fonctionnant en discontinu.
- La figure 13 est une vue similaire aux figures 4 à 11 d'un convoyeur-nappeur intégrant une craqueuse selon la figure 12.
- La figure 14 illustre une vue de dessus et à caractère schématique d'une troisième variante de mise en oeuvre du procédé de l'invention intégrant en plus de la mise en oeuvre de la figure 12, un dispositif complémentaire de régulation constituant un convoyeur d'accumulation, les craqueuses fonctionnant en continu.
- Les figures 15 et 16 sont des vues à caractère schématique illustrant le fonctionnement du convoyeur d'accumulation.
- Les figures 17 à 24 sont des vues à caractère schématique illustrant les différentes phases de fonctionnement de l'installation avec le convoyeur nappeur associé au dispositif de régulation constituant convoyeur d'accumulation.
- La figure 25 illustre une variante de réalisation de l'installation selon l'invention, selon laquelle les moyens de transfert et de dépose des bandes pré-craquées sont définis par des chariots-délivreurs en substitution des convoyeurs-nappeurs décrits aux figures précédentes. Ces chariot-délivreurs sont disposés en amont de la table convoyeuse et sur les côtés de la table convoyeuse dans des axes obliques et/ou divergents au sens d'avancement de la table convoyeuse.
- La figure 26 est une vue à caractère schématique d'un chariot délivreur individuel selon l'invention.
- La figure 27 est une vue à caractère schématique d'un chariot délivreur multiple selon l'invention.
- La figure 28 illustre de manière schématique la dépose successive des nappes de bandes selon différents axes.
- Les figures 29-1, 29-2, 29-3, 29-4, 29-5, 29-6, 29-7, 29-8 illustrent le fonctionnement d'un chariot délivreur selon l'invention.

Le procédé de fabrication du complexe multiaxial réalisé à partir de bandes craquées selon l'invention consiste à disposer sur une table de convoyage, à l'entrée de celle-ci une première couche de bandes pré-craquées, pré-enroulées et prédécoupées, selon l'axe longitudinal de la table, en superposition partielle desdites bandes, à disposer le long de la table convoyeuse au moins deux postes de transfert et de dépose en position oblique et/ou divergente selon des angles prédéterminés réceptionnant chacun une bande pré-craquée pré-enroulée et prédécoupée, à les disposer en superpositions dans des plans différents pour constituer une nappe de bandes craquées multiaxiale, ladite nappe étant ensuite traitée par une aiguilleteuse, l'avancement du tapis support de la table convoyeuse se faisant pas à pas pour assurer la superposition des différentes couches des bandes pré-craquées déposées par les convoyeurs-nappeurs (2C) la mise en oeuvre du procédé s'effectuant sans opération préalable de traitement de cohésion de chacune desdites bandes.

Les postes de transfert et de dépose des bandes pré-craquées peuvent être mis en oeuvre soit par le biais de convoyeurs-nappeurs, soit par le biais de chariots-délivreurs permettant une mise en oeuvre simplifiée de l'installation. On décrira néanmoins ces deux variantes de mise en oeuvre des postes de transfert et de dépose des bandes.

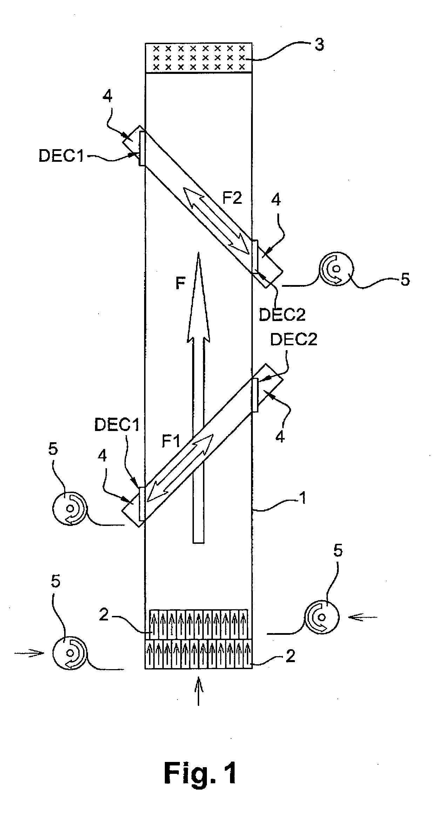

On fait tout d'abord référence au convoyeur-nappeur illustrés aux figures 1 à 25.

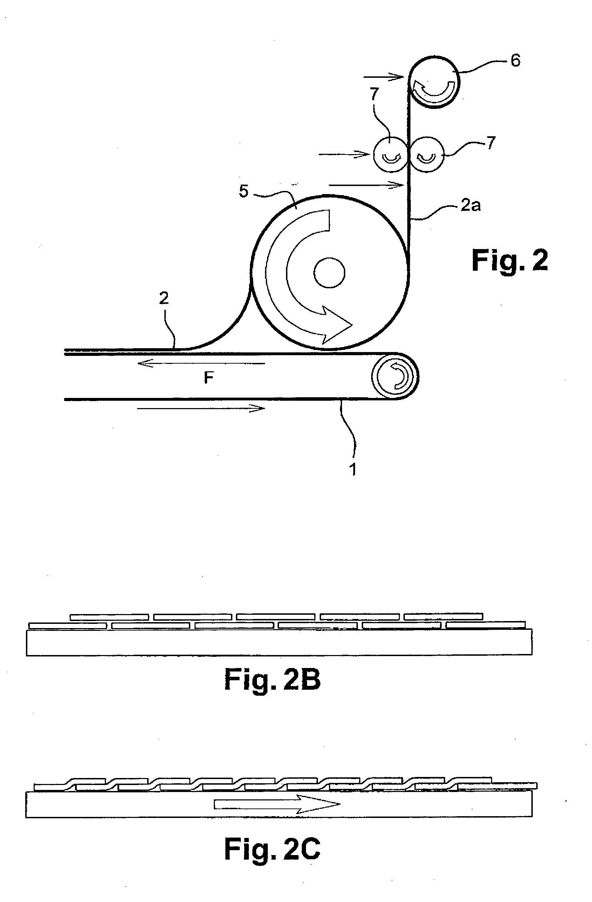

En se référant à la figure 1, la table de convoyage est référencée par (1) et est de grande longueur et défile selon le sens de la flèche (F). En amont elle est susceptible de recevoir des bandes pré-craquées et pré-enroulées (2) et aussi identifiées (BCC) (bande carbone pré-craquée) qui sont disposées en juxtaposition et alignement avec chevauchement partiel de préférence à mi-largeur comme illustré figure 2B. On a ainsi représenté deux rangées de bandes pré-enroulées et prédécoupées. Il peut s'agir avantageusement de bandes carbones pré-enroulées et prédécoupées. En aval de la table convoyeuse est engagé de manière connue un dispositif de fixation (3) tel que par exemple une aiguilleteuse (3) pour assurer la finition du complexe obtenu selon le procédé de l'invention.

La table convoyeuse présente une structure classique avec un tapis entraîné par une motorisation appropriée entre deux axes, l'un moteur, l'autre de renvoi.

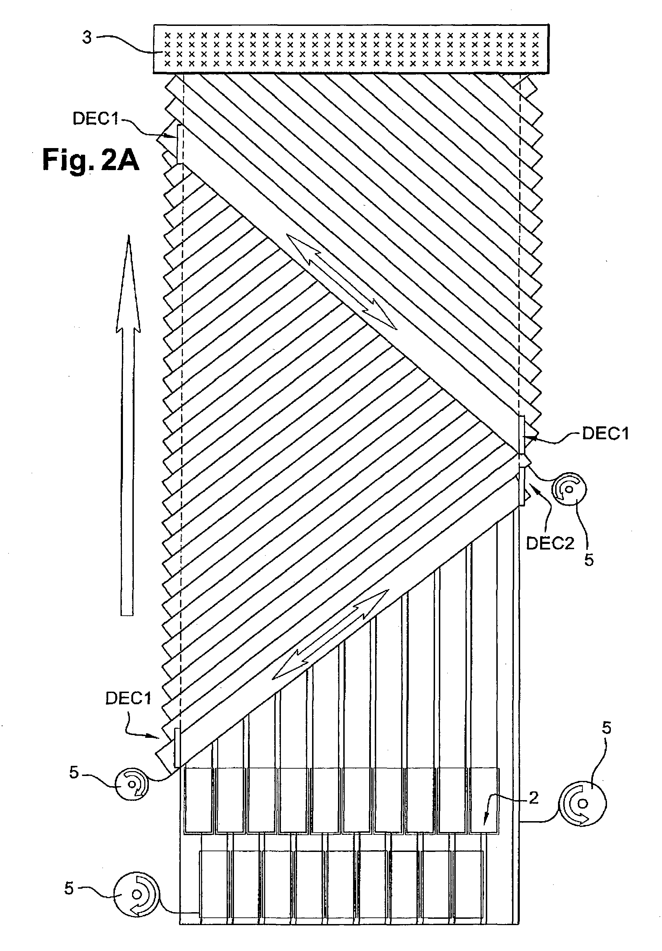

Selon l'invention, le long de la table convoyeuse est ou sont de préférence disposés au moins deux convoyeurs nappeurs (4) positionnés selon des angles définis, en fonctionnement selon les flèches (F1-F2), par rapport au sens d'avancement (F) de la table convoyeuse par exemple à + 45° et - 45° en opposition. Ces convoyeurs nappeurs ont pour fonction de déposer au fur et à mesure chacun une bande craquée sur la table convoyeuse en superposition, pour le premier, sur la première couche de bandes craquées disposées initialement en amont de la table convoyeuse et, pour le second, sur les deux couches déjà déposées provenant de la table convoyeuse et du premier convoyeur nappeur, l'avancement du tapis support de la table convoyeuse se faisant pas à pas pour assurer la superposition des différentes couches des bandes pré-craquées déposées par les convoyeurs-nappeurs (2C) On obtient ainsi comme représenté figure 2A une nappe multicouches en superposition et multiaxiale. On a par ailleurs illustré aux figures 2 et 2A de manière schématique, le dispositif de dépose des bandes pré-enroulées et prédécoupées qui se trouvent ainsi en amont sur la table convoyeuse et en amont de chaque convoyeur nappeur.

En se référant à la figure 2, les bandes prédécoupées sont présentées initialement pré-enroulées en bobine et disposées sur un support papier (2a). Il faut donc séparer la bande prédécoupée de son support. Le dispositif (5) se trouve disposé au-dessus de la table convoyeuse et des convoyeurs nappeurs et la bande prédécoupée est séparée de la bande de papier, laquelle est acheminée puis ré-embobinée sur une bobine (6) avec en intermédiaire un système de cylindres d'entrainement (7) de la bande de papier. Ce dispositif présente l'avantage d'assurer une vitesse d'alimentation linéaire constante, quel que soit le taux de remplissage de chaque bobine.

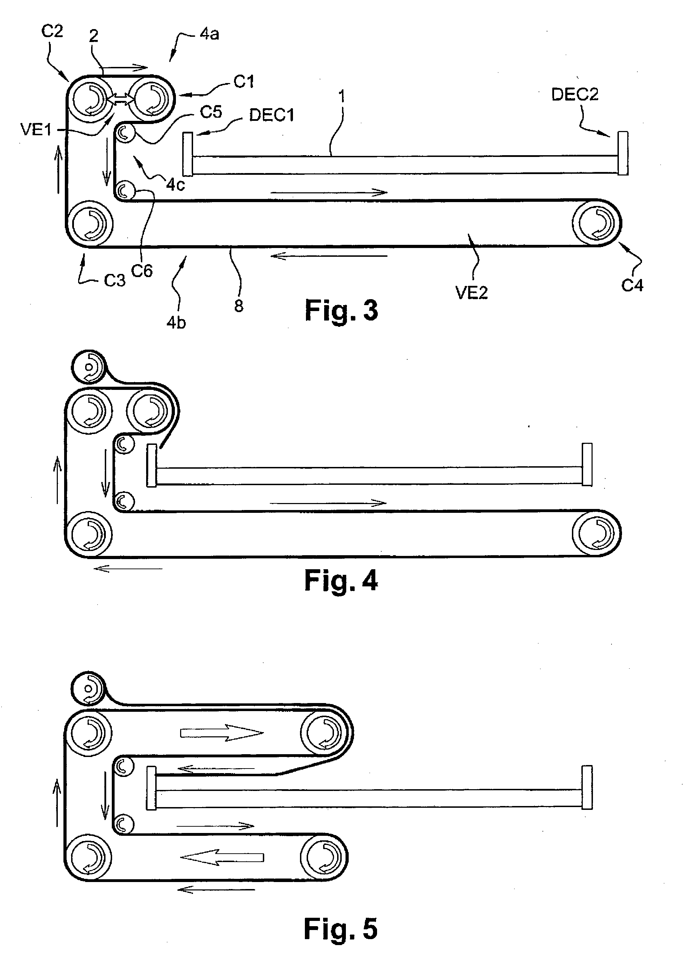

Il convient dès lors de décrire le convoyeur nappeur (4) illustré figure 3, mis en oeuvre selon l'invention.

Le convoyeur nappeur présente une structure susceptible, selon les phases de fonctionnement, d'être en partie (4b) sous la table convoyeuse, ou en partie (4a) au dessus de la table convoyeuse pour la dépose de bandes prédécoupées, les deux parties étant reliées entre elles par une partie de côté latéral (4c), l'ensemble fonctionnant selon un mouvement alternatif discontinu. Il comprend aussi un tapis sans fin (8) qui est agencé sur des cylindres de guidage C1, C2, C3, C4 et des cylindres de renvoi d'angles (C5, C6).

Seul le cylindre (C3) est motorisé et se trouve en position latérale par rapport à la table convoyeuse. Les autres cylindres (C1, C2, C4) sont à guidage libre. Les cylindres (C1) et (C2) se trouvent dans un plan au dessus de la table convoyeuse, les cylindres (C3, C4) dans un plan en dessous. Les cylindres (C5, C6) sont dans un plan vertical de la table convoyeuse et sont à position fixe. Les cylindres (C1) et (C4) sont mobiles, les cylindres (C2) (C3) à position fixe. Les cylindres (C1) et (C4) sont susceptibles d'être translatés horizontalement à l'aide de vérins (VE1-VE2) ou vis sans fin et convenablement associés avec un couple de cylindres respectivement (C1, C2, C3 et C4), soit en éloignement, soit en rapprochement l'un de l'autre selon les phases opératoires.

Ainsi, en se référant aux figures 4 à 11, lorsque le vérin (VE1) commence à écarter les deux cylindres de dessus (C1 et C2), le vérin inférieur (VE2) se contracte en vue de rapprocher les cylindres du dessous. L'amplitude de la course de déplacement desdits vérins est déterminée afin de permettre de déposer les bandes prédécoupées sur la table convoyeuse. Ce convoyeur-nappeur vient donc napper la bande craquée selon la translation de sa partie supérieure dans un sens aller, puis retour.

Un dispositif fixe de blocage et de découpe (DEC1 - DEC2) de la bande craquée en fin de course de nappage est installé, de façon à la fixer et la découper avant d'entamer le nappage dans le sens opposé.

Ce dispositif permet de napper la bande craquée, avec une vitesse linéaire adaptée et dans les deux sens d'un même axe.

Le réglage du convoyeur-nappeur aura à combiner la vitesse de translation des cylindres (C1) et (C4) d'entraînement et la vitesse de rotation de ceux-ci, cette dernière déterminant la vitesse d'avancée de la bande du convoyeur-nappeur elle-même.

De plus, au terme de chaque mouvement (aller et retour) du convoyeur-nappeur, la bande craquée est bloquée et découpée. Pendant cette opération, la table convoyeuse est à l'arrêt. Ensuite au terme de l'opération de découpe, elle avance -en pas à pas - d'une distance équivalente à la largeur de la bande craquée, ou à la moitié de celle-ci dans le cas où l'on a paramétré un taux de recouvrement de 50 % par rapport à la bande craquée déposée lors du mouvement de translation précédent. Durant ces étapes, le convoyeur-nappeur est lui aussi en pause.

Ensuite, le convoyeur-nappeur entame son mouvement dans le sens opposé.

Il est préférable que le convoyeur-nappeur (4) étale la bande craquée sur une longueur légèrement supérieure à la ligne en diagonale de la table convoyeuse, et ce pour deux raisons :
- pour éviter de créer des boucles dans la bande craquée quand on inverse le sens de l'étalage (de la dépose).
- pour permettre l'opération de découpe de la bande craquée.

Pour mieux comprendre le processus de fabrication, on se réfère aux figures 4 à 11.

Figure 4, le convoyeur-nappeur est pré-alimenté en bande de carbone pré-craquée et pré-enroulée. Il entame sa dépose vers la droite.

Figure 5, le vérin supérieur (VE1) du convoyeur-nappeur se tend, de façon à permettre la dépose de la bande craquée vers le côté opposé de la table convoyeuse. A l'inverse, le vérin inférieur (VE2) se contracte.

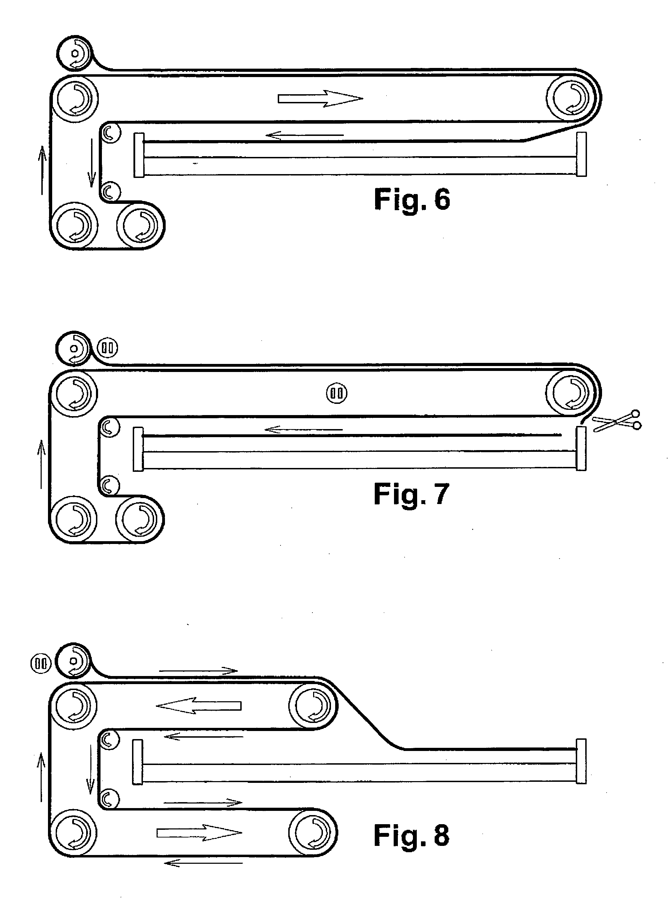

Figure 6 le convoyeur-nappeur termine sa dépose de la bande de carbone craquée

Figure 7 le convoyeur-nappeur s'arrête (pause) durant l'opération de découpe par le dispositif (DEC2) de la bande de carbone craquée. A la suite de quoi, la table convoyeuse avance d'un cran. Durant ces deux étapes, la bande pré-craquée et pré-enroulée cesse d'être alimentée (pause).

Figure 8 : une fois la bande coupée et la table avancées d'un cran, le convoyeur-nappeur entame son mouvement de translation retour. Le vérin inférieur (VE2) se tend. A l'inverse, le vérin supérieur (VE1) se contracte. Le convoyeur-nappeur dépose à ce moment la bande craquée qu'il avait accumulée à l'aller. Pendant cette étape, l'alimentation de la bande pré-craquée et pré-enroulée reste toujours en pause, puisque le convoyeur-nappeur a accumulé la bande à l'aller.

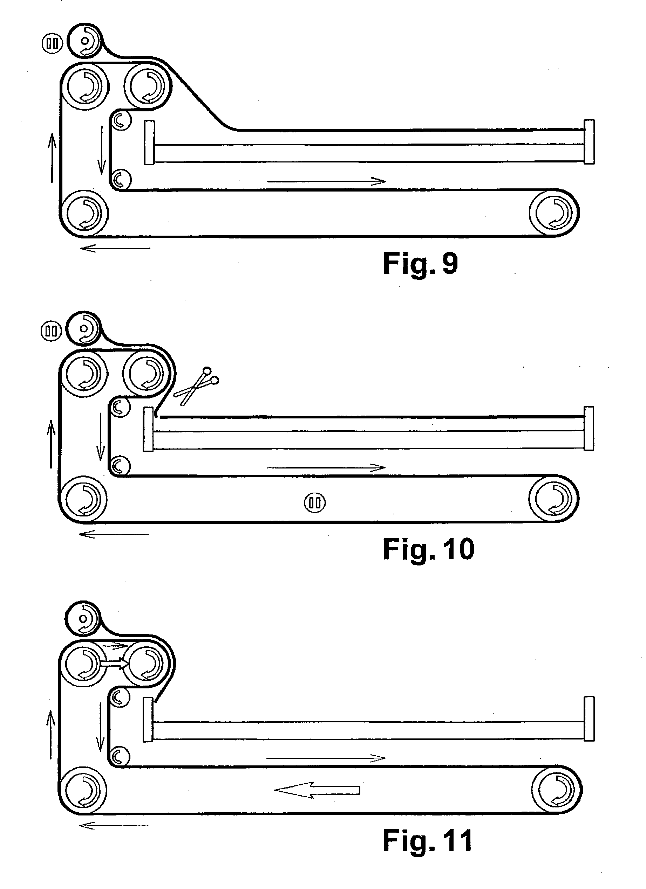

Figure 9 : le convoyeur-nappeur termine sa dépose de la bande carbone craquée vers la gauche (BCC). L'alimentation de la bande pré-craquée reste toujours en pause.

Figure 10 : le convoyeur nappeur s'arrête (pause) durant l'opération de découpe par le dispositif (DEC) de la bande carbone craquée. A la suite de quoi, la table convoyeuse avance d'un cran. Pendant ces deux étapes, l'alimentation de la bande pré-craquée est toujours en pause.

Figure 11 : le convoyeur-nappeur repart en translation vers le côté opposé de la table convoyeuse. Le vérin supérieur se tend tandis que le vérin inférieur se contracte. A ce moment, l'alimentation de la bande pré-craquée se remet en fonctionnement, et ainsi de suite.

Au bout de la table convoyeuse est implantée une aiguilleteuse qui va fixer la structure formée de trois nappes craquées unidirectionnelles dans une structure multiaxiale dans son ensemble. Le cas échéant peut être prévu un dispositif de fixation par pinçage (non illustré) de chaque côté de la table convoyeuse de façon à bloquer la structure à trois nappes durant l'opération d'aiguilletage.

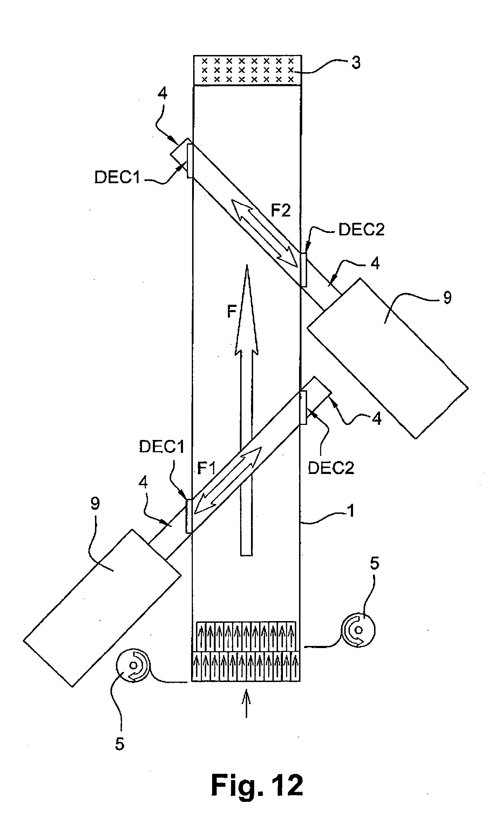

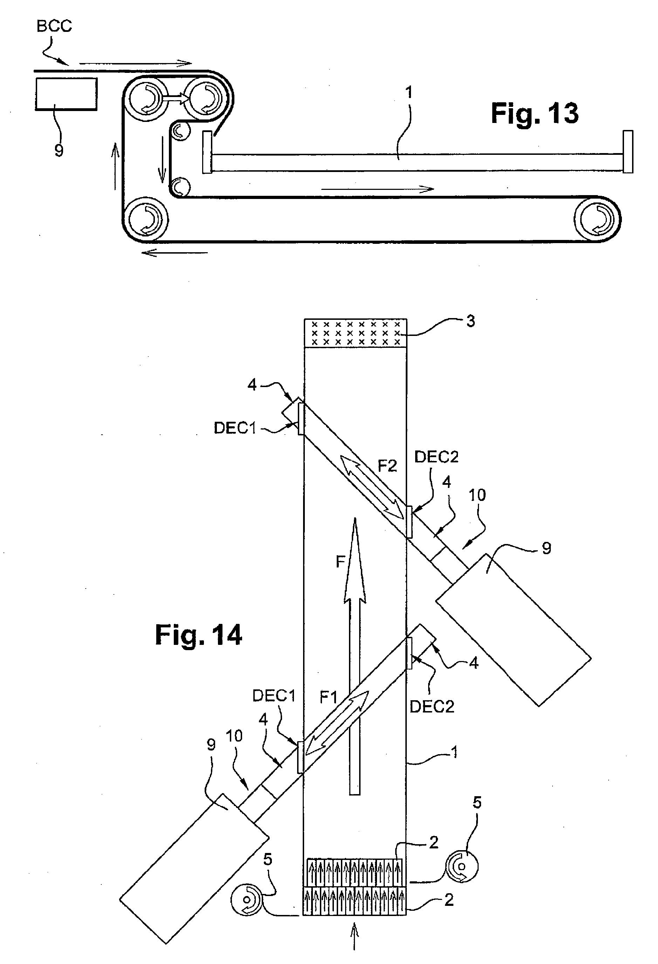

L'installation telle que décrite peut être complétée par l'adjonction à chaque convoyeur-nappeur d'une craqueuse (9) disposée en amont et permettant une alimentation en automatique de chaque convoyeur-nappeur (figures 12 et 13). Dans cette mise en oeuvre les craqueuses (9) travaillent en discontinu pour alimenter les convoyeur-nappeurs et remplacent simplement le dispositif (5) de présentation de bandes craquées pré-enroulées. Le concept de l'invention dans la mise en oeuvre du procédé reste le même.

L'installation telle que représentée aux figures 12 et 13 mettant en oeuvre le concept de l'invention et intégrant des craqueuses peut être aussi complétée par l'adjonction d'un dispositif (10) complémentaire de régulation constituant un convoyeur d'accumulation ainsi que représenté aux figures 14 à 24. Ce convoyeur d'accumulation est intégré entre chaque convoyeur-nappeur (4) et la craqueuse (9) associée et a pour but de pouvoir alimenter chacun des deux convoyeurs-nappeurs par une craqueuse fonctionnant cette fois en continu. Il a pour fonction d'absorber la production en continu de la craqueuse pendant les temps d'arrêt du convoyeur nappeur lors des phases de découpe de la bande craquée ainsi que pendant le temps d'avancement de la table convoyeuse pas à pas.

Il y a lieu d'exposer le fonctionnement du convoyeur d'accumulation.

Ce convoyeur d'accumulation (10) est constitué d'un tapis convoyeur (10a) guidé par des cylindres rotatifs fixes (A1, A2). Seul le cylindre (A1) est motorisé pour entrainer le tapis, (A2) étant libre. Au-dessous du dispositif se situe un troisième cylindre (CT) lui aussi rotatif, mais qui a comme spécificité de pouvoir monter et descendre le long d'un axe vertical de façon à tendre plus ou moins le tapis convoyeur (10a). Enfin, un quatrième cylindre appelé « cylindre poussoir » (CP), lui aussi mobile le long d'un axe vertical et situé au dessus du dispositif, a comme fonction de tendre plus ou moins le tapis convoyeur, mais dans la direction opposée.

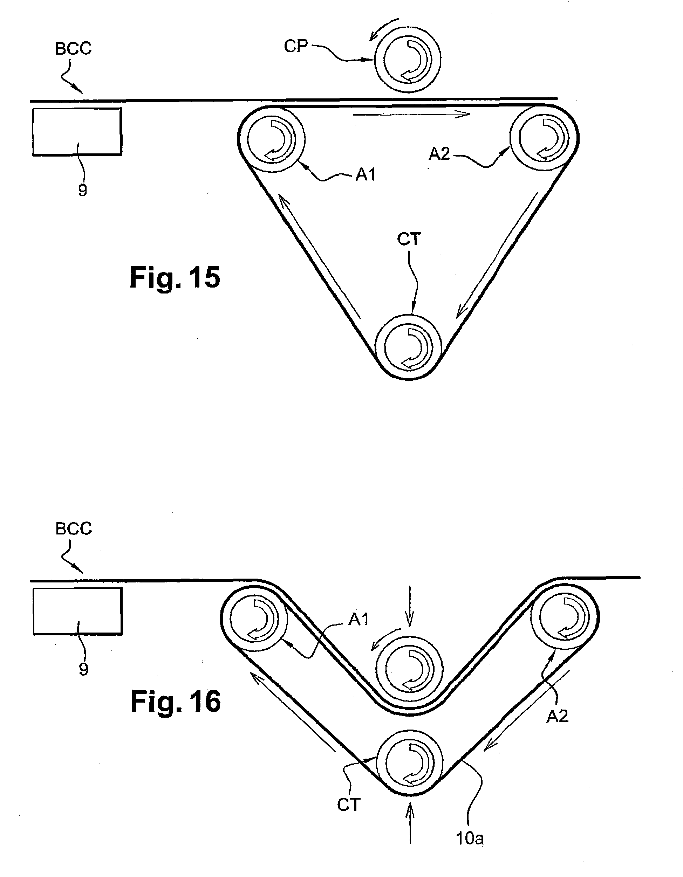

Durant l'alimentation du convoyeur-nappeur, le convoyeur d'accumulation alimente ce dernier à la vitesse de sortie de la craqueuse (figure 15). Le cylindre de tension (CT) est alors en position basse et le cylindre poussoir (CP) en position haute. Lors des arrêts liés aux opérations de découpe de la bande craquée, durant l'avancement de la table convoyeuse, ainsi que durant le mouvement de translation retour du convoyeur-nappeur, le convoyeur d'accumulation se détend, la longueur de bande située entre A1 et A2 s'allonge, absorbant ainsi la production continue de la craqueuse. Le cylindre de tension est alors en position haute. A l'inverse, le cylindre poussoir (CP) est en position basse, de façon à contraindre le tapis à s'allonger vers le bas. L'allongement du tapis convoyeur ainsi obtenu permet d'absorber la longueur excédentaire fabriquée par la craqueuse durant ce temps.

Au terme des arrêts liés aux opérations de découpe de la bande craquée, durant l'avancement de la table convoyeuse, ainsi que durant le mouvement de translation retour du convoyeur-nappeur, le convoyeur d'accumulation se retend progressivement et réalimente à nouveau le convoyeur-nappeur à la vitesse de production de la craqueuse.

Bien entendu, durant ces arrêts liés à la découpe et à l'avancement de la table convoyeuse, le convoyeur-nappeur arrêtera lui aussi d'alimenter le nappage.

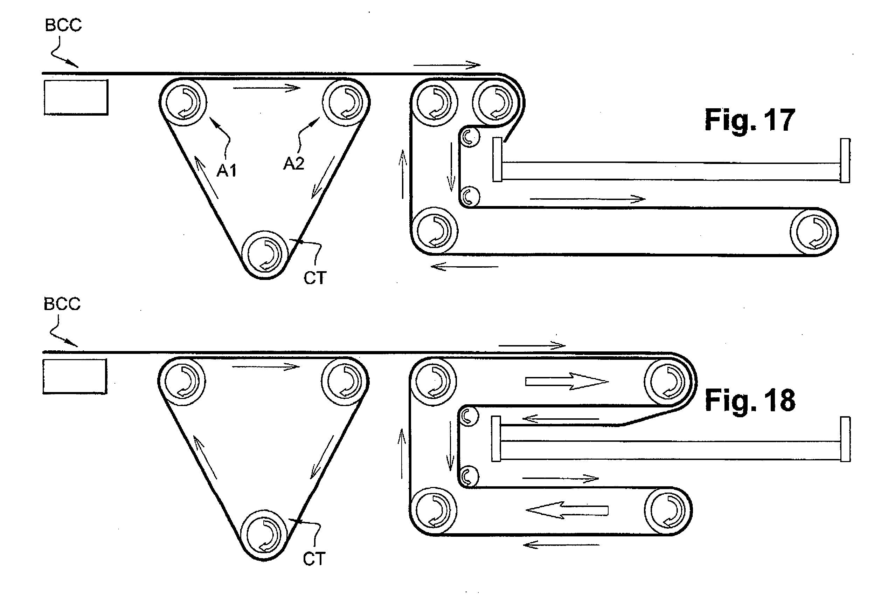

Pour mieux comprendre le processus de fabrication on pourra utilement se référence aux figures 17 à 24.

Figure 17 : le convoyeur-nappeur est alimenté par le convoyeur d'accumulation à la vitesse de production de la bande carbone craquée par la craqueuse. Il entame sa dépose vers la droite.

Figure 18 le vérin supérieur du convoyeur-nappeur se tend, de façon à permettre la dépose de la bande craquée vers le côté opposé de la table convoyeuse. A l'inverse, le vérin inférieur se contracte.

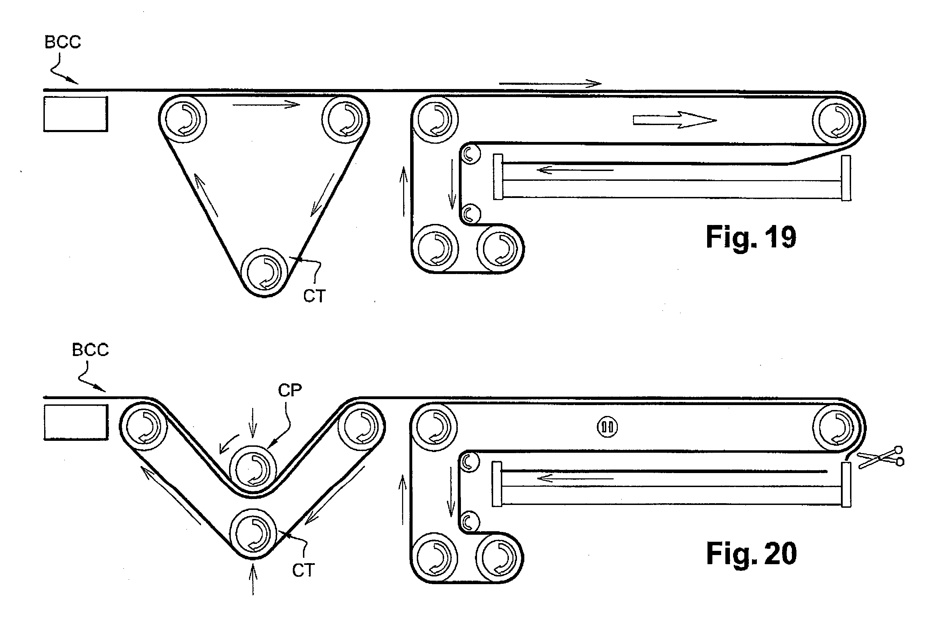

Figure 19 : le convoyeur-nappeur termine sa dépose de la bande carbone craquée

Figure 20 : le convoyeur-nappeur s'arrête (pause) durant l'opération de découpe de la bande carbone craquée. Pendant ce temps, le convoyeur d'accumulation se détend, permettant ainsi d'accumuler la production toujours continue de la craqueuse. A la suite de quoi, la table convoyeuse avance d'un cran. Pendant ce temps, le convoyeur d'accumulation continue à se détendre, permettant ainsi de continuer à accumuler la production toujours continue de la craqueuse.

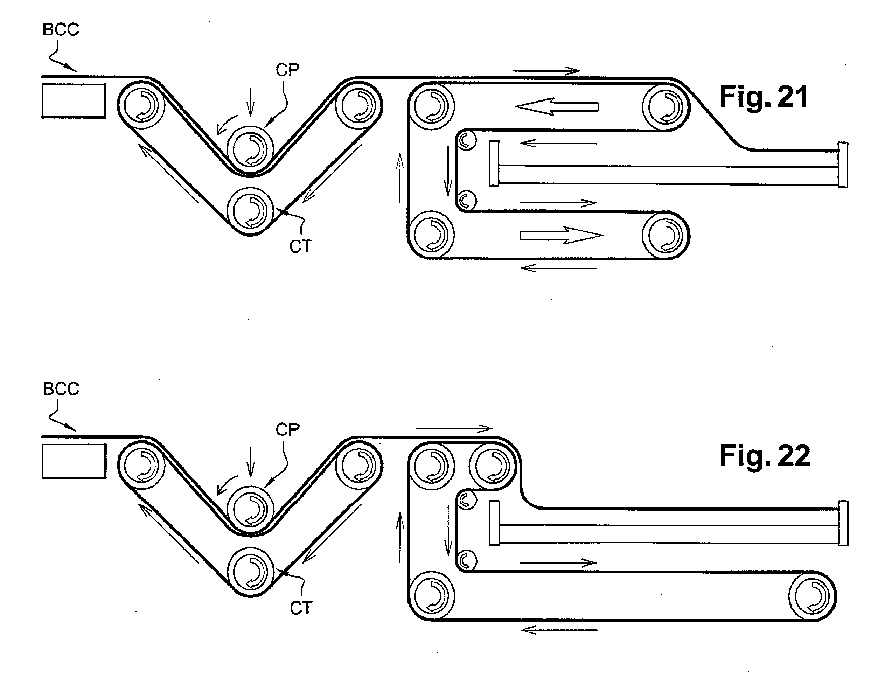

Figure 21 : une fois la bande coupée et la table avancée d'un cran, le convoyeur-nappeur entame son mouvement de translation retour. Le vérin supérieur se contracte tandis que le vérin inférieur se tend. Le convoyeur-nappeur dépose à ce moment une bande craquée qu'il avait accumulée à l'aller. Il n'absorbe donc toujours pas pendant ce temps la production de la craqueuse. Aussi, afin d'absorber la production accumulée de la bande de carbone craquée durant cette étape, le convoyeur d'accumulation continue à se détendre.

Figure 22 : le convoyeur-nappeur termine sa dépose de la bande de carbone craquée vers la gauche (BBC)

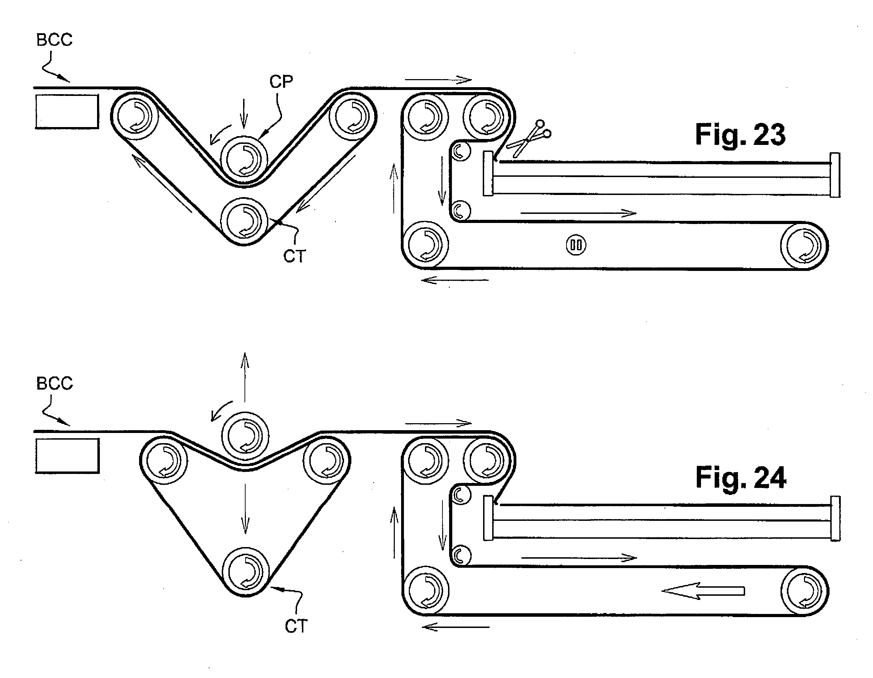

Figure 23 : le convoyeur nappeur s'arrête (pause) durant l'opération de découpe de la bande carbone craquée (BCC). Pendant ce temps, le convoyeur d'accumulation continue à se détendre, permettant ainsi d'accumuler la production toujours continue de la craqueuse. A la suite de quoi, la table convoyeuse avance d'un cran. Pendant ce temps, le convoyeur d'accumulation continue à se détendre, permettant ainsi de continuer à accumuler la production toujours continue de la craqueuse.

Figure 24 : le convoyeur-nappeur repart en translation vers le côté opposé de la table convoyeuse. Le vérin supérieur se tend tandis que le vérin inférieur se contracte. A ce moment, le cylindre presseur (CP) du convoyeur d'accumulation remonte progressivement tandis que le cylindre de tension (CT) redescend de façon à retendre progressivement le tapis convoyeur et à re-délivrer progressivement la longueur de bande craquée accumulée durant les étapes précédentes.

On retrouve en bout de table convoyeuse l'aiguilleteuse décrite précédemment.

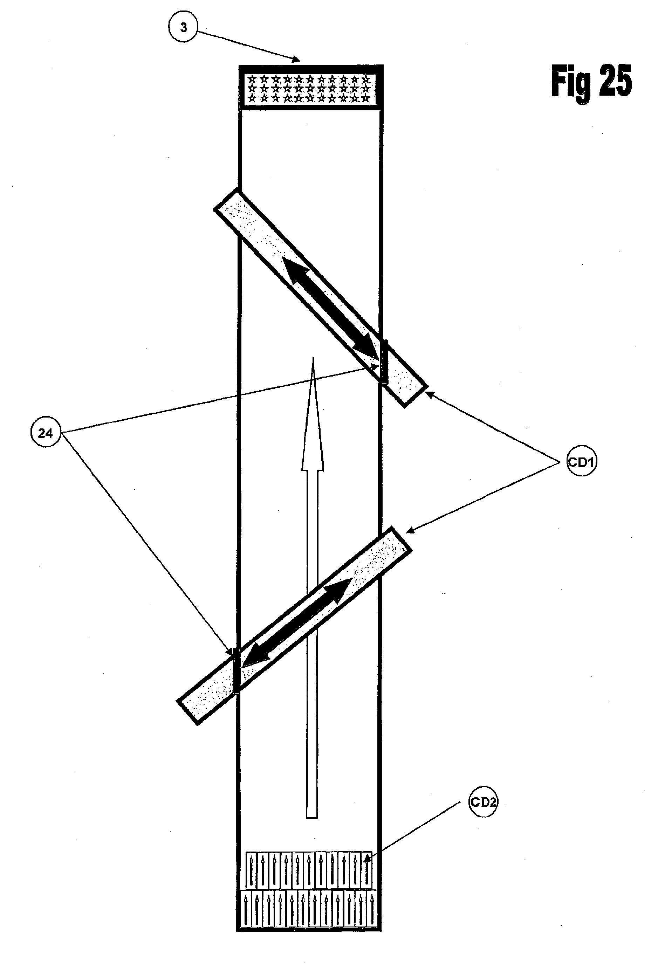

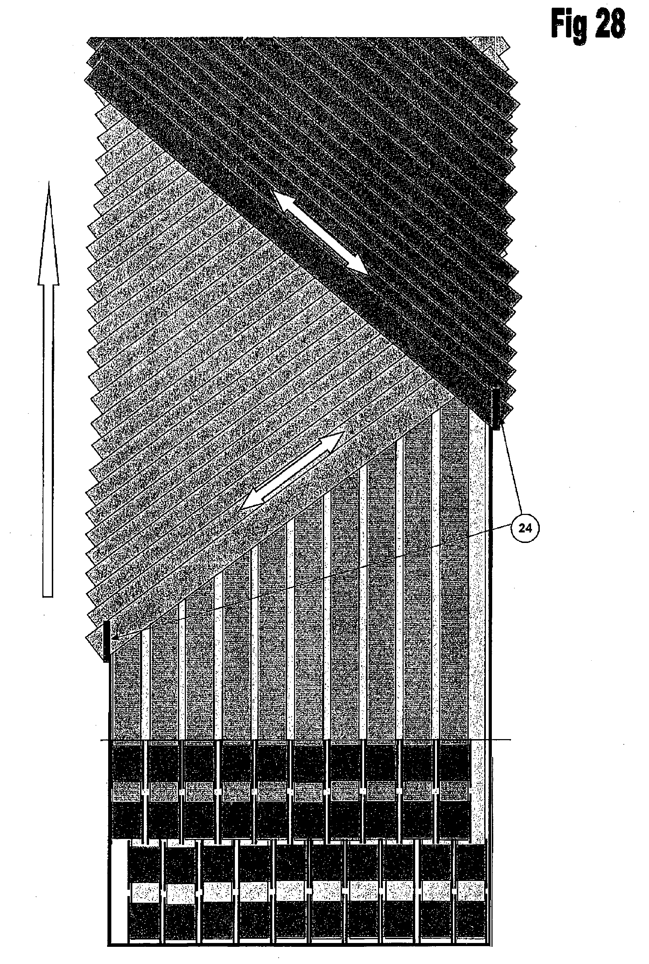

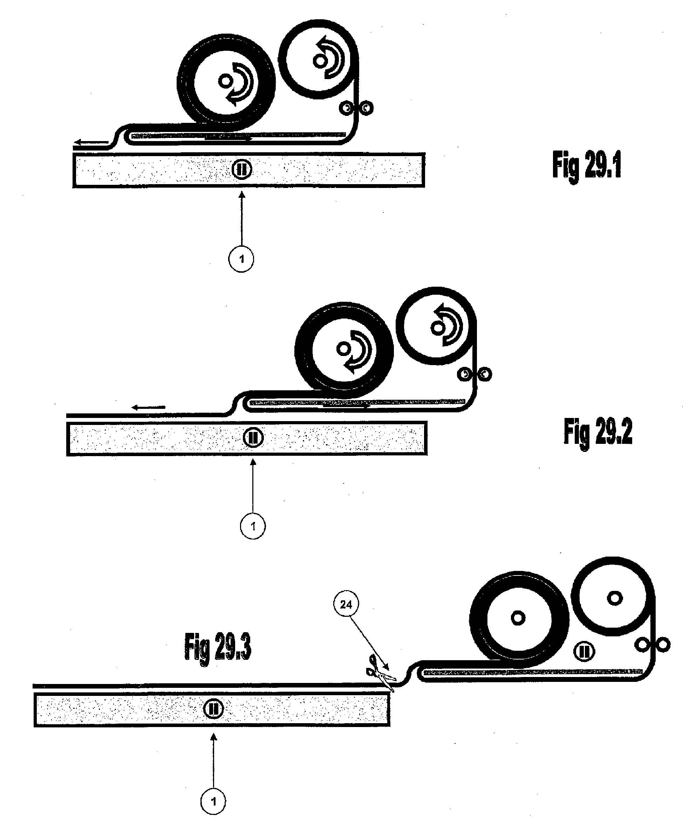

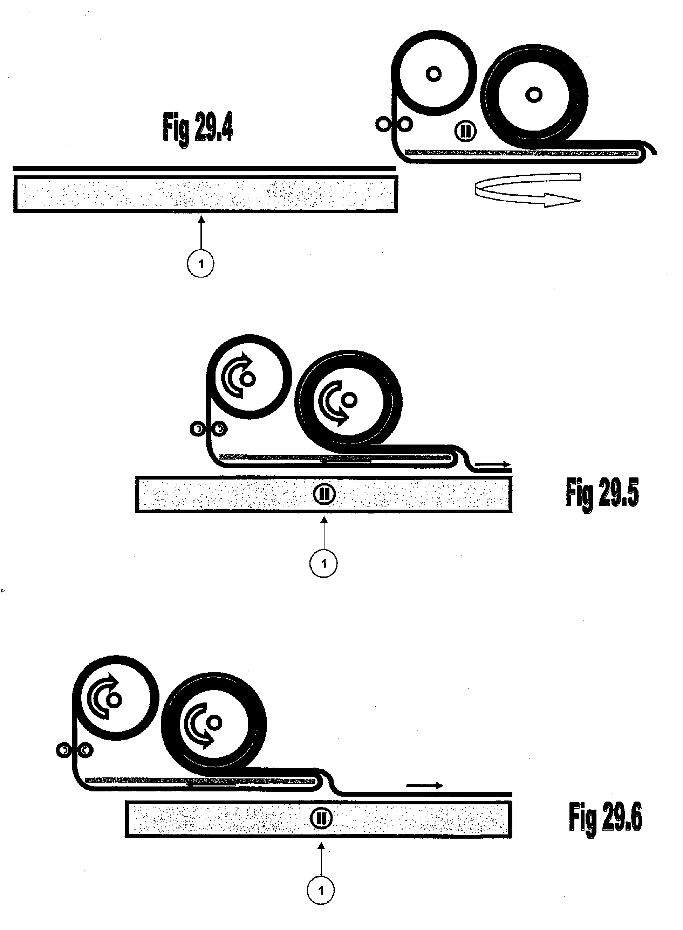

On fait maintenant référence à la seconde variante de réalisation des postes de transfert et dépose des bandes craquées, représentées aux figures 25 à 29-5.

Dans cette mise en oeuvre, l'installation utilise des chariots-délivreurs de deux types, d'une part simple CD1, et d'autre part multiple CD2, qui sont disposés par rapport à la table de convoyage (1) respectivement sur les côtés de la table en position oblique et/ou divergente et d'autre part en amont de la table pour permettre la dépose des bandes craquées sur la table de convoyage. Les chariots délivreurs réceptionnent des bobines B de bandes pré-craquées et pré-enroulées avec insertion d'une bande de papier (20) enroulé entre chaque spire de bande de carbone (21) pour en assurer la protection. Les chariots délivreurs peuvent être disposés en position décalée et en opposition comme présentés Figure 25. Ils peuvent aussi être disposés à partir d'un point commun d'un même côté en s'écartant dans une orientation oblique et/ou divergente.

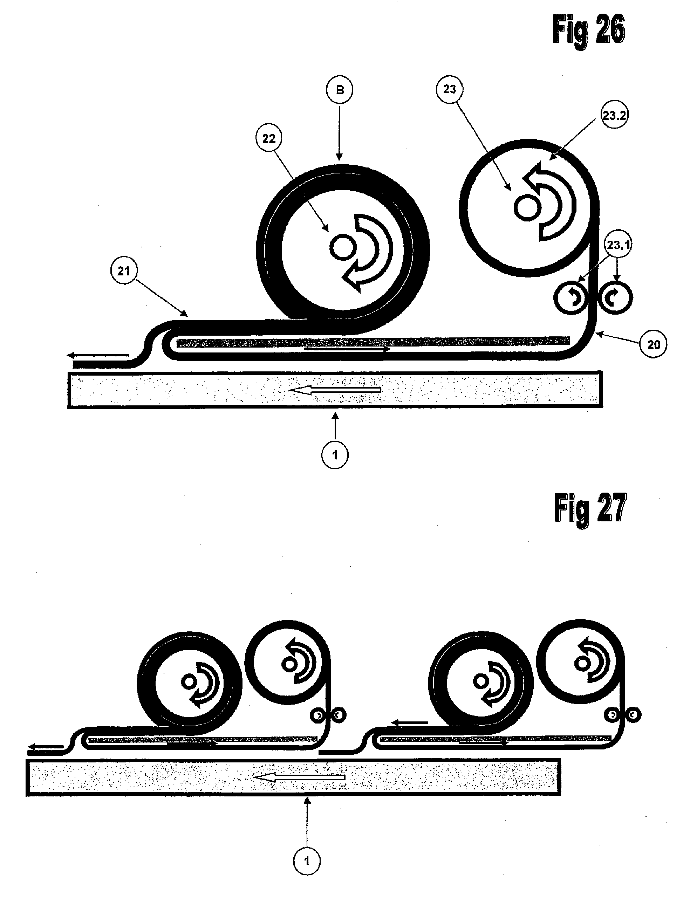

Dans cette réalisation, les chariots-délivreurs simples ou multiples sont agencés en comprenant en combinaison un premier cylindre (22) tournant dans un sens récepteur des bandes pré-craquées et pré-enroulées, et un dispositif (23) d'évacuation et de ré-embobinage de la bande de papier (20). Plus particulièrement, ce dispositif (23) se trouve intégré dans le chariot-délivreur en situation derrière le premier cylindre (22). Le dispositif (23) comprend deux mandrins motorisés (23-1) tournant en opposition entre lesquels passent les bandes de papier pour l'entraîner sur un cylindre de récupération (23-2), tournant en opposition par rapport au premier cylindre. Les dits mandrins motorisés absorbent la bande de papier avec une vitesse linéaire constante. Les deux cylindres et les mandrins précités sont disposés à position fixe par rapport au chariot-délivreur CD1 CD2. On a représenté aux figures 26 et 27 respectivement un chariot-délivreur simple et un chariot-délivreur multiple. Ils comprennent le même agencement d'un premier cylindre (22) enrouleur de la bande pré-craquée et du dispositif (23) associé d'évacuation de la bande de papier, mais dans le cas des chariots-délivreurs multiples, ceux-ci sont disposés en parallèle et en léger décalage pour permettre la distribution et le déroulement de bandes sur la table convoyeuse au fur et à mesure de l'avancement de celle-ci, et dans une configuration de présentation des bandes en superposition partielle comme indiqué précédemment. Les chariots- délivreurs multiples CD2 comme représentés figure 25 se trouvent être disposés en amont de la table de convoyage (1) afin de la charger de bandes (21) de carbone après séparation de la bande-papier (20). On a ainsi représenté figure 25 le positionnement de chariots-délivreurs multiples qui sont dans le cas particulier illustrés au nombre de 2.

Les chariots- délivreurs individuels CD1 sont disposés de façon à délivrer chacun une seule bande (21) de carbone et sont positionnés comme précédemment dans la première réalisation selon des angles prédéfinis par rapport au sens d'avancement de la table de convoyage. Ces positionnements angulaires sont par exemple et non limitativement à 45° par rapport à l'axe longitudinal de la table de convoyage. Ces chariots-délivreurs individuels ont pour fonction de déposer au fur et à mesure une bande craquée sur la table de convoyage de façon unidirectionnelle.

On a également représenté figure 25 d'une manière similaire à la figure 1 un dispositif de fixation (3) placé en bout de la table convoyeuse pour assurer la cohésion de l'ensemble des couches constituées par les bandes multiaxiales ainsi formées. Ce dispositif de fixation peut-être de façon exemplative mais non exhaustive une aiguilleteuse, une pré-aiguilleteuse, un dispositif de fixation par jet d'eau, une machine à tricoter ou encore un dispositif de vaporisation d'un moyen chimique de liaison ou autre.

Il convient dès lors d'exposer la mise en oeuvre du procédé du complexe multiaxial de nappe avec la mise en oeuvre de cette variante de réalisation. On dispose en amont de la table de convoyage dans le sens longitudinal de celle-ci autant de bandes craquées et pré-enroulées que nécessaire pour remplir la largeur de la table. Ces bandes craquées et pré-enroulées ont été confectionnées préalablement et mises en bobine et comprennent ainsi la bande de carbone, et la bande de papier disposée entre chaque spire de façon à protéger la bande de carbone. Plusieurs chariots-multiples sont ainsi disposés en parallèle en permettant un recouvrement paramétrable des bandes entre elles, généralement fixé à 50 %. La mise en fonctionnement de la table de convoyage entraîne le déroulement des bobines et la dépose simultanée des bandes de carbone tandis que la bande de papier en provenance de la dite bobine est récupérée et enroulée à l'aide du dispositif disposé sur chaque chariot-délivreur.

Parallèlement, les chariots-délivreurs individuels seront mis en fonctionnement pour la délivrance de bandes de carbone selon l'angulation choisie par rapport au sens de déplacement de la table de convoyage. Comme prévu dans la première réalisation , en relation avec chacun des chariots-délivreurs individuels est prévu un dispositif de blocage et de découpe (24) de la bande de carbone en fin de course de dépose avant l'opération de retour en arrière du chariot-délivreur correspondant.

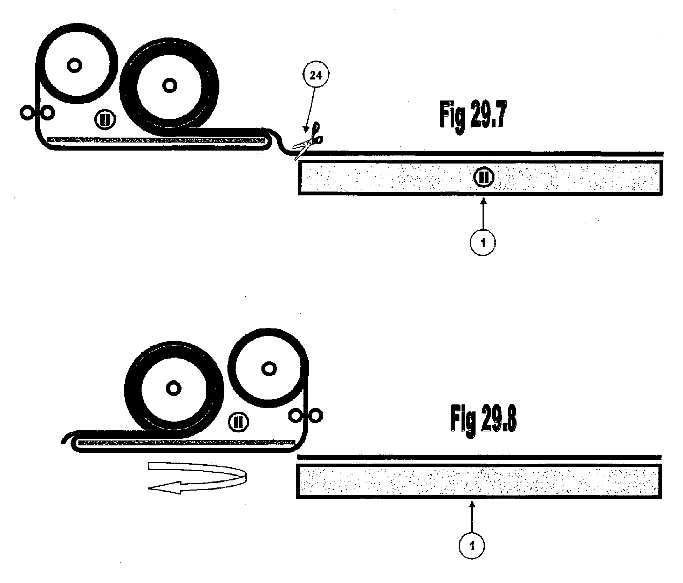

En se référant aux figures 29-1 à 29-8, on explicite le fonctionnement et le déplacement d'un chariot-délivreur individuel.

Figure 29-1, le chariot-délivreur individuel CD-1, qui comprend une bobine de bande pré-craquée met en oeuvre par le fonctionnement du cylindre et du dispositif de récupération de la bande de papier, la dépose de la bande de carbone (21) par rapport à la table de convoyage en entamant sa translation vers la droite, comme représenté figure 29-2. Les mandrins motorisés du dispositif de récupération de la bande de papier assurent la traction et l'enlèvement de la bande de papier (20) qui est évacuée sur le cylindre de récupération (23-2).

Dans la phase suivante, représentée figure 29-3, le chariot-délivreur individuel a terminé sa translation de l'autre côté de la table de convoyage vers la droite comme représenté à cette figure. Dans cette situation, les mandrins motorisés d'absorption de la bande de papier (23-1) sont désactivés ce qui entraîne également l'arrêt du cylindre de récupération (23-2). La dépose de la bande de carbone est également stoppée et l'on peut procéder alors avec le dispositif de découpe (24) au sectionnement de la bande craquée disposée sur le premier cylindre. Il y a donc une séparation avec la bande de carbone qui vient d'être déposée sur la table de convoyage.

Pendant ces trois phases, il est à noter que la table de convoyage est restée immobile,

Ensuite, comme représenté à la figure 29-4, le chariot-délivreur individuel est disposé sur un support permettant une rotation du dit chariot-délivreur sur lui-même de 180° à l'aide de moyens de rotation de type connu dans le commerce, et actionnés après chaque passage de part et d'autre de la table de convoyage.

Durant ce mouvement, la table de convoyage avance d'un pas, puis s'arrête à nouveau.

En figure 29-5, le chariot-délivreur individuel CD1, entame sa translation vers la gauche, comme représenté figure 29-6. Les mandrins motorisés du dispositif de récupération de la bande de papier (23-1) se remettent en mouvement, assurant la traction et l'enlèvement de la bande de papier (20) qui est évacuée sur le cylindre de récupération (23-2).

Dans la phase suivante, représentée figure 29-7, le chariot-délivreur individuel a terminé sa translation de l'autre côté de la table de convoyage, vers la gauche, comme représenté à cette figure. Dans cette situation, les mandrins motorisés d'absorption de la bande de papier (23-1) sont désactivés, ce qui entraîne également l'arrêt du cylindre de récupération (23-2). La dépose de la bande de carbone est également stoppée et l'on peut procéder alors, avec le dispositif de découpe (24), au sectionnement de la bande craquée disposée sur le premier cylindre.

Il y a donc une séparation avec la bande de carbone qui vient d'être déposée sur la table de convoyage.

Pendant ces trois phases, il est à noter que la table de convoyage est restée immobile (pause).

Ensuite, comme représenté à la figure 29-8, le chariot-délivreur individuel effectue une rotation sur lui-même de 180°.

Durant ce mouvement, la table de convoyage avance d'un pas, puis s'arrête à nouveau.

Ensuite, le chariot délivreur entame à nouveau une translation vers la droite, et ainsi de suite.

Le dispositif de retournement du chariot-délivreur au terme de chaque mouvement de translation permet d'optimiser la productivité de la ligne en permettant une dépose de la bande dans chaque sens.

Cette seconde variante de réalisation telle que décrite et illustrée aux dessins est de conception plus simple et moins couteuse et trouve des applications et utilisations en fonction des besoins recherchés. Le déplacement des chariots-délivreurs individuels par rapport à la table de convoyage s'effectue par tous moyens appropriés.

Les avantages ressortent bien de l'invention. Le procédé peut permettre la réalisation d'un complexe multiaxial de nappes réalisées à partir de bandes craquées, dans des conditions mécaniques adaptables selon les besoins, sans nécessité de procéder à une opération préalable de cohésion de chacune des bandes mises en oeuvre, et avec un investissement matériel moins coûteux.

## Revendications

1. Procédé de fabrication d'un complexe multiaxial de nappes réalisées à partir de câbles craqués sous forme de bandes, consistant à disposer sur une table de convoyage, à l'entrée de celle-ci, par le biais d'un dispositif, une première couche de bandes craquées pré-enroulées et prédécoupées selon l'axe longitudinal de la table, en superposition partielle desdites bandes, à disposer le long de la table convoyeuse au moins deux moyens de transfert des bandes en position oblique et/ou divergente selon des angles prédéterminés réceptionnant chacun une bande pré-craquée et à les disposer en superpositions successives à la première couche de bandes prédécoupées dans des plans différents, pour constituer une nappe multiaxiale de bandes craquées, ladite nappe étant ensuite traitée par un dispositif de fixation (3), l'avancement du tapis support de la table convoyeuse se faisant pas à pas pour assurer la superposition des différentes couches de bandes pré-craquées par lesdits moyens de transfert,
**caractérisé en ce que** la mise en oeuvre du procédé s'effectue sans opération de traitement de cohésion préalable de chacune desdites bandes, et **en ce que** les dits moyens de transfert des bandes longitudinales et transversales assurent la dépose des bandes en réceptionnant chacun une bande prédécoupée disposée directement sans autre opération intermédiaire, la dite bande comprenant une bande de carbone et une bande support papier (2a), les dits moyens étant agencés pour recevoir des moyens de ré-embobinage de la bande support papier après séparation avec la bande de carbone.

2. Procédé selon la revendication 1, **caractérisé en ce que** les dits moyens de transfert et de dépose de bandes sont des convoyeurs-nappeurs réceptionnant chacun une bande pré-craquée pré-enroulée et prédécoupée.

3. Procédé selon la revendication 1, **caractérisé en ce que** les dits moyens de transfert et de dépose des bandes sont des chariots-délivreurs.

4. Installation de mise en oeuvre du procédé selon les revendications 1 et 2, comprenant une table convoyeuse (1) présentant en amont la réception de bandes pré-craquées et pré-enroulées via un dispositif et, en aval, un dispositif de fixation (3), **caractérisée en ce qu'**elle comprend au moins deux convoyeurs nappeurs (4) positionnés selon des angles définis par rapport au sens d'avancement (F) de la table convoyeuse ayant chacun pour fonction de recevoir - via un dispositif individuel (5) - et de déposer sur la table convoyeuse au fur et à mesure de leur translation une bande craquée n'ayant subi aucune opération de traitement de cohésion préalable, jusqu'à un dispositif de fixation et de découpe situé de l'autre côté de la table, en superposition pour le premier sur la première couche de bandes craquées n'ayant subi aucune opération de traitement de cohésion préalable disposées initialement en amont de la table convoyeuse et pour le second sur les deux couches de bandes craquées n'ayant subi aucune opération de traitement de cohésion préalable, déjà déposées provenant de la table convoyeuse et du premier convoyeur nappeur, permettant l'obtention d'une nappe multicouches en superposition et multiaxiale,
et **en ce que** le convoyeur nappeur présente une structure susceptible, selon les phases de fonctionnement, d'être en partie (4b) sous la table convoyeuse, ou en partie (4a) au dessus de la table convoyeuse pour la dépose de bandes craquées sans opération de traitement de cohésion préalable, les deux parties étant reliées entre elles par une partie de côté latéral (4c), l'ensemble fonctionnant selon un mouvement alternatif discontinu,
**et en ce qu**'il comprend aussi un tapis sans fin (8) qui est agencé sur des cylindres de guidage C1, C2, C3, C4 et des cylindres de renvoi d'angles (C5, C6).

5. Installation selon la revendication 4, **caractérisée en ce que** le cylindre (C3) est motorisé et se trouve en position latérale par rapport à la table convoyeuse,
**et en ce que** les autres cylindres (C1, C2, C4) sont à guidage libre,
**et en ce que** les cylindres (C1) et (C2) se trouvent dans un plan au dessus de la table convoyeuse, les cylindres (C3, C4) dans un plan en dessous,
**et en ce que** les cylindres (C5, C6) sont dans un plan vertical de la table convoyeuse et sont à position fixe,
**et en ce que** les cylindres (C1) et (C4) sont mobiles, les cylindres (C2) (C3) à position fixe,
**et en ce que** les cylindres (C1) et (C4) sont susceptibles d'être translatés horizontalement à l'aide de vérins (VE1-VE2) ou de vis sans fin et convenablement associés avec un couple de cylindres respectivement (C1, C2, C3 et C4), soit en éloignement, soit en rapprochement l'un de l'autre selon les phases opératoires, selon une amplitude de la course de déplacement desdits vérins qui est déterminée afin de permettre de déposer les bandes craquées non cohésives sur la table convoyeuse.

6. Installation selon la revendication 4, **caractérisée en ce qu'**elle comprend un dispositif fixe de blocage et de découpe (DEC1 - DEC2) de la bande craquée sans opération de traitement de cohésion préalable en fin de course de nappage, de façon à la fixer et la découper avant d'entamer le nappage dans le sens opposé.

7. Installation selon l'une quelconque des revendications 4 à 6, **caractérisée en ce qu'**elle comprend l'adjonction à chaque convoyeur-nappeur d'une craqueuse (9) disposée en amont et permettant une alimentation automatique en discontinu de chaque convoyeur-nappeur.

8. Installation selon l'une quelconque des revendications 4 à 7, permettant d'alimenter les convoyeurs-nappeurs par des craqueuses fonctionnant en continu, **caractérisée en ce qu'**elle comprend l'adjonction d'un dispositif (10) complémentaire de régulation constituant un convoyeur d'accumulation, **et en ce que** le convoyeur d'accumulation est intégré entre chaque convoyeur-nappeur (4) et la craqueuse (9) associée, afin de permettre d'absorber la production en continu de la craqueuse pendant les temps d'arrêt du convoyeur nappeur lors des phases de découpe de la bande craquée sans opération de traitement de cohésion préalable ainsi que pendant le temps d'avancement de la table convoyeuse pas à pas.

9. Installation selon la revendication 8, **caractérisée en ce que** le convoyeur d'accumulation (10) est constitué d'un tapis convoyeur (10a) guidé par des cylindres rotatifs fixes (A1, A2), **et en ce qu**'au dessous du dispositif se situe un troisième cylindre (CT) lui aussi rotatif, mais qui a comme spécificité de pouvoir monter et descendre le long d'un axe vertical de façon à tendre plus ou moins le tapis convoyeur (10a), **et en ce que** un quatrième cylindre appelé « cylindre poussoir » (CP), lui aussi mobile le long d'un axe vertical et situé au dessus du dispositif, a comme fonction de tendre plus ou moins le tapis convoyeur, mais dans la direction opposée.

10. Installation de mise en oeuvre du procédé selon les revendications 1 et 3 ensemble, **caractérisé en ce qu'**elle comprend des chariots-délivreurs de deux types, d'une part simple CD1, et d'autre part multiples CD2, qui sont disposés par rapport à la table de convoyage (1) respectivement sur les côtés de la table en position oblique et/ou divergente et d'autre part en amont de la table pour permettre la dépose des bandes craquées sans opération de traitement de cohésion préalable sur la table de convoyage, et **en ce que** les chariots délivreurs réceptionnent des bobines B de bandes pré-craquées et pré-enroulées sans opération de traitement de cohésion préalable avec insertion d'une bande de papier (20) enroulé entre chaque spire de bande de carbone (21) pour en assurer la protection.

11. Installation selon la revendication 10, **caractérisée en ce que** les chariots-délivreurs simples ou multiples sont agencés en comprenant en combinaison un premier cylindre (22) tournant dans un sens récepteur des bandes pré-craquées et pré-enroulées, et un dispositif (23) d'évacuation et de ré-embobinage de la bande de papier (20), **et en ce que** ce dispositif (23) se trouve intégré dans le chariot-délivreur en situation derrière le premier cylindre (22).

12. Installation selon la revendication 11, **caractérisée en ce que** le dispositif (23) comprend deux mandrins motorisés (23-1) tournant en opposition entre lesquels passe la bande de papier pour l'entraîner sur un cylindre de récupération (23-2), tournant en opposition par rapport au premier cylindre, **et en ce que** les dits mandrins motorisés absorbent la bande de papier avec une vitesse linéaire constante, **et en ce que** les deux cylindres et les mandrins précités sont disposés à position fixe par rapport au chariot-délivreur CD 1-CD2.

13. Installation selon la revendication 11, **caractérisée en ce que** les chariots-délivreurs sont disposés sur des supports permettant leur rotation sur eux-mêmes de 180° à l'aide de moyens de rotation et actionnés après chaque passage de part et d'autre de la table de convoyage.

14. Installation selon la revendication 10, **caractérisée en ce que** les chariots-délivreurs multiples CD2 sont disposés en parallèle et en léger décalage pour permettre la distribution et le déroulement de bandes sans opération de traitement de cohésion préalable sur la table convoyeuse au fur et à mesure de l'avancement de celle-ci, et dans une configuration de présentation des bandes en superposition partielle, **et en ce que** les chariots-délivreurs multiples CD2 se trouvent être disposés en amont de la table de convoyage (1) afin de la charger de bandes (21) de carbone après séparation de la bande-papier (20).

15. Installation selon la revendication 10, **caractérisé en ce que** les chariots- délivreurs individuels CD1 sont disposés de façon à délivrer chacun une seule bande (21) de carbone sans opération de traitement de cohésion préalable et sont positionnés selon des angles prédéfinis par rapport au sens d'avancement de la table de convoyage.

16. Installation selon la revendication 10, **caractérisée en ce que** les chariots-délivreurs sont disposés du même côté de la table de convoyage avec une orientation divergente.

## Patentansprüche

1. Verfahren zur Herstellung eines multiaxialen Komplexes aus Flächengebilden, die aus gebrochenen Kabeln in Form von Streifen gebildet sind, darin bestehend, auf einem Fördertisch, an dessen Eingang, mittels einer Vorrichtung eine erste Lage von vorgewickelten und vorgeschnittenen gebrochenen, Streifen entlang der Längsachse des Tisches, in Teilüberlagerung der Streifen anzuordnen, entlang des Fördertisches wenigstens zwei Mittel zum Überführen der Streifen in schräge und/oder divergierende Position unter vorbestimmten Winkeln anzuordnen, die jeweils einen vorgebrochenen Streifen aufnehmen, und sie in aufeinanderfolgenden Schichtungen auf der ersten Lage von vorgeschnittenen Streifen in verschiedenen Ebenen anzuordnen, um ein multiaxiale Flächengebilde von gebrochenen Streifen zu bilden, wobei das Flächengebilde anschließend mittels einer Fixiervorrichtung (3) bearbeitet wird, wobei der Vorschub des Tragbandes des Fördertisches schrittweise erfolgt, um das Übereinanderanordnen der verschiedenen Lagen von vorgebrochenen Streifen durch die Überführungsmittel sicherzustellen,
**dadurch gekennzeichnet, dass** die Durchführung des Verfahrens ohne vorherigen Vorgang einer Kohäsionsbehandlung eines jeden der Streifen erfolgt und dass die Mittel zum Überführen der Längs- und Querstreifen das Ablegen der Streifen dadurch sicherstellen, dass sie jeweils einen vorgeschnittenen Streifen, welcher direkt ohne weiteren Zwischenvorgang angeordnet wird, aufnehmen, wobei der Streifen einen Kohlenstoffstreifen und einen Papiertragstreifen (2a) umfasst, wobei die Mittel dazu eingerichtet sind, Mittel zum Wiederaufwickeln des Papiertragstreifens nach Trennen von dem Kohlenstoffstreifen aufzunehmen.

2. Verfahren nach Anspruch 1, **dadurch gekennzeichnet, dass** die Mittel zum Überführen und Ablegen von Streifen Legeförderer sind, die jeweils einen vorgewickelten und vorgeschnittenen vorgebrochenen Streifen aufnehmen.

3. Verfahren nach Anspruch 1, **dadurch gekennzeichnet, dass** die Mittel zum Überführen und Ablegen der Streifen Lieferschlitten sind.

4. Anlage zur Durchführung des Verfahrens nach den Ansprüchen 1 und 2, umfassend einen Fördertisch (1), der stromaufwärts die Aufnahme von vorgebrochenen und vorgewickelten Streifen über eine Vorrichtung und stromabwärts eine Fixiervorrichtung (3) aufweist, **dadurch gekennzeichnet, dass** sie wenigstens zwei Legeförderer (4) umfasst, die unter definierten Winkeln gegenüber der Vorschubrichtung (F) des Fördertisches positioniert sind, deren Aufgabe jeweils darin besteht, einen gebrochenen Streifen, der keinem vorherigen Kohäsionsbehandlungsvorgang unterzogen wurde, über eine Einzelvorrichtung (5) aufzunehmen und auf dem Fördertisch entsprechend ihrer Verschiebung, bis zu einer auf der anderen Seite des Tisches gelegenen Fixier- und Schneidevorrichtung aufzulegen, der erste angeordnet über der ersten Lage von gebrochenen Streifen, die keinem vorherigen Kohäsionsbehandlungsvorgang unterzogen wurden, anfangs vor dem Fördertisch angeordnet sind, und der zweite angeordnet über den beiden bereits aufgelegten, von dem Fördertisch und dem ersten Legeförderer kommenden Lagen von gebrochenen Streifen, die keinem vorherigen Kohäsionsbehandlungsvorgang unterzogen wurden, was ermöglicht, ein multiaxiales Flächengebilde aus mehreren übereinanderliegenden Lagen zu erhalten,
und dass der Legeförderer eine Struktur aufweist, die geeignet ist, entsprechend den Betriebsphasen teilweise (4b) unter dem Fördertisch oder teilweise (4a) oberhalb des Fördertisches für das Ablegen von gebrochenen Streifen ohne vorherigen Kohäsionsbehandlungsvorgang zu sein, wobei die beiden Teile durch einen Längsseitenteil (4c) untereinander verbunden sind, wobei die Anordnung in einer unterbrochenen Hin- und Herbewegung arbeitet,
und dass er auch ein Endlosband (8) umfasst, das auf Leitwalzen C1, C2, C3, C4 und Eckumlenkwalzen (C5, C6) angeordnet ist.

5. Anlage nach Anspruch 4, **dadurch gekennzeichnet, dass** die Walze (C3) motorisiert ist und sich in Bezug auf den Fördertisch in seitlicher Position befindet,
und dass die anderen Walzen (C1, C2, C4) frei geführt sind,
und dass die Walzen (C1) und (C2) sich in einer Ebene oberhalb des Fördertisches befinden, die Walzen (C3, C4) in einer Ebene darunter,
und dass die Walzen (C5, C6) sich in einer vertikalen Ebene des Fördertisches befinden und eine feste Position aufweisen,
und dass die Walzen (C1) und (C4) beweglich sind, die Walzen (C2) (C3) eine feste Position aufweisen,
und dass die Walzen (C1) und (C4) geeignet sind, mit Hilfe von Zylindern (VE1-VE2) oder Schnecken horizontal verschoben zu werden, die dementsprechend jeweils einem Walzenpaar (C1, C2, C3 und C4) zugeordnet sind, je nach den Betriebsphasen entweder voneinander entfernend oder einander nähernd, in einer Weite des Bewegungshubes der Zylinder, welche festgelegt ist, um zu ermöglichen, die nicht zusammenhängenden gebrochenen Streifen auf dem Fördertisch abzulegen.

6. Anlage nach Anspruch 4, **dadurch gekennzeichnet, dass** sie eine feste Vorrichtung zum Blockieren und Schneiden (DEC1 - DEC2) des gebrochenen Streifens ohne vorherigen Kohäsionsbehandlungsvorgang in der Legeendstellung umfasst, derart, dass er fixiert und geschnitten wird, bevor mit dem Legen in der Gegenrichtung begonnen wird.

7. Anlage nach einem der Ansprüche 4 bis 6, **dadurch gekennzeichnet, dass** sie die Zuordnung einer Reißvorrichtung (9) zu jedem Legeförderer umfasst, welche vorgeordnet ist und ein automatisches, diskontinuierliches Beschicken eines jeden Legeförderers ermöglicht.

8. Anlage nach einem der Ansprüche 4 bis 7, die ermöglicht, die Legeförderer durch fortlaufend arbeitende Reißvorrichtungen zu beschicken, **dadurch gekennzeichnet, dass** sie die Zuordnung einer ergänzenden Regelungsvorrichtung (10), die einen Sammelförderer bildet, umfasst, und dass der Sammelförderer zwischen jedem Legeförderer (4) und der zugeordneten Reißvorrichtung (9) eingefügt ist, um zu ermöglichen, die fortlaufende Erzeugung der Reißvorrichtung während der Stillstandzeiten des Legeförderers in den Phasen des Schneidens des gebrochenen Streifens ohne vorherigen Kohäsionsbehandlungsvorgang sowie während der Zeit des schrittweisen Vorschubs des Fördertisches aufzunehmen.

9. Anlage nach Anspruch 8, **dadurch gekennzeichnet, dass** der Sammelförderer (10) von einem Förderband (10a), das durch feste Drehwalzen (A1, A2) geführt ist, gebildet ist, und dass sich unterhalb der Vorrichtung eine ebenfalls drehbare dritte Walze (CT) befindet, deren Besonderheit aber darin besteht, dass sie sich entlang einer vertikalen Achse nach oben und unten bewegen kann, um das Förderband (10a) mehr oder weniger zu spannen, und dass eine als "Stoßwalze" (CP) bezeichnete vierte Walze, die ebenfalls entlang einer vertikalen Achse beweglich ist und sich oberhalb der Vorrichtung befindet, die Aufgabe hat, das Förderband mehr oder weniger zu spannen, jedoch in der entgegengesetzten Richtung.

10. Anlage zur Durchführung des Verfahrens nach den Ansprüchen 1 und 3 zusammen, **dadurch gekennzeichnet, dass** sie Lieferschlitten von zwei Arten, einerseits einfachen CD1 und andererseits mehrfachen CD2, umfasst, die in Bezug auf den Fördertisch (1) an den Seiten des Tisches in schräger und/oder divergierender Position bzw. andererseits stromaufwärts des Tisches angeordnet sind, um das Ablegen der gebrochenen Streifen ohne vorherigen Kohäsionsbehandlungsvorgang auf dem Fördertisch zu ermöglichen, und dass die Lieferschlitten Spulen B von vorgebrochenen und vorgewickelten Streifen ohne vorherigen Kohäsionsbehandlungsvorgang, unter Einfügen eines gewickelten Papierstreifens (20) zwischen jeder Windung eines Kohlenstoffstreifens (21), um dessen Schutz zu gewährleisten, aufnehmen.

11. Anlage nach Anspruch 10, **dadurch gekennzeichnet, dass** die Einfach- oder Mehrfach-Lieferschlitten in Kombination umfassend eine erste Walze (22), die sich in einer Aufnahmerichtung der vorgebrochenen und vorgewickelten Streifen dreht, und eine Vorrichtung (23) zum Abführen und Wiederaufwickeln des Papierstreifens (20) angeordnet sind, und dass diese Vorrichtung (23) in den Lieferschlitten in Stellung hinter der ersten Walze (22) integriert ist.

12. Anlage nach Anspruch 11, **dadurch gekennzeichnet, dass** die Vorrichtung (23) zwei sich gegenläufig drehende motorisierte Spindeln (23-1) umfasst, zwischen denen der Papierstreifen hindurch läuft, um ihn auf eine Rückgewinnungswalze (23-2) zu führen, die sich zu der ersten Walze gegenläufig dreht, und dass die motorisierten Spindeln den Papierstreifen mit einer konstanten linearen Geschwindigkeit aufnehmen, und dass die beiden Walzen und die vorgenannten Spindeln in Bezug auf den Lieferschlitten CD1-CD2 an fester Position angeordnet sind.

13. Anlage nach Anspruch 11, **dadurch gekennzeichnet, dass** die Lieferschlitten an Haltern angeordnet sind, die deren Rotation um sie selbst um 180° mit Hilfe von Drehmitteln ermöglichen, die nach jedem Durchgang auf beiden Seiten des Fördertisches betätigt werden.

14. Anlage nach Anspruch 10, **dadurch gekennzeichnet, dass** die Mehrfach-Lieferschlitten CD2 parallel und leicht versetzt angeordnet sind, um die Ausgabe und das Abwickeln von Streifen ohne vorherigen Kohäsionsbehandlungsvorgang auf dem Fördertisch entsprechend seines Vorschubs zu ermöglichen, sowie in einer Ausführung zur Anordnung der Streifen in teilweiser Überlagerung, und dass die Mehrfach-Lieferschlitten CD2 dem Fördertisch (1) vorgeordnet sind, um ihn mit Kohlenstoffstreifen (21) nach Abtrennen des Papierstreifens (20) zu beschicken.

15. Anlage nach Anspruch 10, **dadurch gekennzeichnet, dass** die Einzellieferschlitten CD1 derart angeordnet sind, dass sie jeweils einen einzigen Kohlenstoffstreifen (21) ohne vorherigen Kohäsionsbehandlungsvorgang liefern, und unter vordefinierten Winkeln gegenüber der Vorschubrichtung des Fördertisches angeordnet sind.

16. Anlage nach Anspruch 10, **dadurch gekennzeichnet, dass** die Lieferschlitten auf der gleichen Seite des Fördertisches mit einer divergierenden Ausrichtung angeordnet sind.

## Claims

1. Method of manufacturing a multi-axial laminate of webs produced from stretch broken cables in the form of strips, consisting of arranging, on a conveyor table, at the feed thereto, by means of a device, a first layer of pre-wound and pre-cut stretch broken strips along the longitudinal axis of the table, said strips being partially superimposed, arranging along the conveyor table at least two means of transferring the strips in an oblique and/or divergent position at predetermined angles each receiving a pre-broken strip and arranging them in successive superimpositions on the first layer of pre-cut strips in different planes, in order to form a multi-axial web of stretch broken strips, the said web then being processed by a fixing device (3), the movement of the support belt of the conveyor table taking place in steps in order to ensure the superimposition of the various layers of pre-broken strips by the said transfer means,
**characterised in that** the implementing of the method takes place without any operation of prior cohesion treatment of each of said strips, **and in that said** means of transferring the longitudinal and transverse strips ensure the deposition of the strips by each receiving a pre-cut strip arranged directly without any other intermediate operation, the said strip comprising a carbon strip and a paper support strip (2a), the said means being arranged to receive means of rewinding the paper support strip after separation from the carbon strip.

2. Method according to claim 1, **characterised in that** the said means of transferring and depositing strips are cross lappers each receiving a pre-broken, pre-wound and pre-cut strip.

3. Method according to claim 1, **characterised in that** the said means of transferring and depositing strips are delivery carriages.

4. Installation for implementing the method according to claims 1 and 2, comprising a conveyor table (1) having upstream the reception of pre-broken and pre-wound strips via a device and downstream a fixing device (3), **characterised in that** it comprises at least two cross lappers (4) positioned at angles defined with respect to the direction of travel (F) of the conveyor table each having the function of receiving - via an individual device (5) - and depositing on the conveyor table as they are translated a stretch broken strip that has not undergone any prior cohesion treatment operation, as far as a fixing and cutting device situated at the other side of the table, in superimposition in the first case on the first layer of stretch broken strips that have not undergone any prior cohesion treatment operation, arranged initially upstream of the conveyor table, and in the second case on the two layers of stretch broken strips that have not undergone any prior cohesion treatment operation, already deposited, coming from the conveyor table and the first cross lapper, making it possible to obtain a multi-axial multilayer superimposed web,
**and in that** the cross lapper has a structure able, according to the operating phases, to be partly (4b) under the conveyor table or partly (4a) above the conveyor table for the deposition of stretch broken strips without any prior cohesion treatment operation, the two parts being connected together by a lateral side part (4c), the assembly functioning in a discontinuous alternating movement,
**and in that** it also comprises an endless belt (8) that is arranged on guide cylinders C1, C2, C3, C4 and deflection cylinders (C5, C6).

5. Installation according to claim 4, **characterised in that** the cylinder (C3) is driven and is situated in a lateral position with respect to the conveyor table,
**and in that** the other cylinders (C1, C2, C4) are of the free guidance type,
**and in that** the cylinders (C1) and (C2) are situated in a plane above the conveyor table, the cylinders (C3, C4) in a plane below,
**and in that** the cylinders (C5, C6) are in a vertical plane of the conveyor table and have a fixed position,
**and in that** the cylinders (C1) and (C4) are movable, and the cylinders (C2) (C3) have a fixed position,
**and in that** the cylinders (C1) and (C4) are able to be translated horizontally by means of jacks (VE1-VE2) or worms and suitably associated with a pair of cylinders respectively (C1, C2, C3 et C4), either moving away from or closer to each other according to the operating phases, the amplitude of the movement travel of the said jacks being determined so as to make it possible to deposit the non-cohesive stretch broken strips on the conveyor table.

6. Installation according to claim 4, **characterised in that** it comprises a fixed device (DEC1 - DEC2) for blocking and cutting the stretch broken strip without any prior cohesion treatment operation at the end of the layering travel, so as to fix it and cut it before beginning the layering in the opposite direction.

7. Installation according to any one of claims 4 to 6, **characterised in that** it comprises the addition to each cross lapper of a stretch breaker (9) arranged upstream and providing automatic discontinuous supplying of each cross lapper.

8. Installation according to any one of claims 4 to 7, making it possible to supply the cross lappers by means of continuously functioning stretch breakers, **characterised in that** it comprises the addition of a complimentary regulation device (10) constituting an accumulation conveyor **and in that** the accumulation conveyor is integrated between each cross lapper (4) and the associated stretch breaker (9), to make it possible to absorb the continuous production of the stretch breaker during the stoppage time of the cross lapper during phases of cutting the stretch broken strip without any prior cohesion treatment operation as well as during the time of movement of the conveyor table in steps.

9. Installation according to claim 8, **characterised in that** the accumulation conveyor (10) consists of a conveyor belt (10a) guided by fixed rotary cylinders (A1, A2), **and in that** a third cylinder (CT) is situated under the device, said cylinder also being rotary but having the specificity of being able to rise and fall along a vertical axis so as to tension the conveyor belt (10a) to a greater or less extent, **and in that** a fourth cylinder called a "pusher cylinder" (CP), also able to move along a vertical axis and situated above the device, has the function of tensioning the conveyor belt to a greater or lesser extent, but in the opposite direction.

10. Installation for implementing the method according to claims 1 and 3 together, **characterised in that** it comprises delivery carriages (CD) of two types, firstly single CD1 and secondly multiple CD2, which are arranged with respect to the conveyor table (1) respectively on the sides of the table in the oblique and/or divergent position and secondly upstream of the table to enable stretch broken strips to be deposited on the conveyor table without any prior cohesion treatment operation, and **in that** the delivery carriages receive reels B of pre-broken and pre-wound strips without any prior cohesion treatment operation with the insertion of a paper strip (20) wound between each carbon strip turn (21) in order to provide protection thereof.

11. Installation according to claim 10, **characterised in that** the single or multiple delivery carriages are arranged so as to comprise in combination a first cylinder (22) rotating in a direction for receiving pre-broken and pre-wound strips, and a device (23) for discharging and rewinding the paper strip (20), **and in that** this device (23) is integrated in the delivery carriage behind the first cylinder (22).

12. Installation according to claim 11, **characterised in that** the device (23) comprises two driven spindles (23-1) rotating in opposition, between which the paper strip passes, so as to draw it onto a recovery cylinder (23-2), rotating in opposition with respect to the first cylinder, **and in that** the said driven spindles absorb the paper strip at a constant linear speed, **and in that** the aforementioned two cylinders and spindles are arranged in a fixed position with respect to the delivery carriage CD1-CD2.

13. Installation according to claim 11, **characterised in that** the delivery carriages are arranged on supports enabling them to rotate on themselves through 180° by means of rotation means and actuated after each passage on either side of the conveyor table.

14. Installation according to claim 10, **characterised in that** the multiple delivery carriages CD2 are arranged in parallel and slightly offset to enable strips without any prior cohesion treatment operation to be distributed and unwound on the conveyor table as the latter advances, and in a configuration of presentation of the strips in partial superimposition, **and in that** the multiple delivery carriages CD2 are arranged upstream of the conveyor table (1) in order to load it with carbon strips (21) after separation of the paper strip (20).

15. Installation according to claim 10, **characterised in that** the individual delivery carriages CD1 are arranged so as each to deliver a single carbon strip (21) without any prior operation of cohesion treatment and are positioned at predefined angles with respect to the direction of movement of the conveyor table.

16. Installation according to claim 10, **characterised in that** the delivery carriages are arranged on the same side of the conveyor table with a divergent orientation.
